# EUROPEAN PATENT SPECIFICATION

(11) **EP 3 105 885 B1**
(45) Date of publication and mention of the grant of the patent: **17.06.2020**
(21) Application number: 14703845.9
(22) Date of filing: 11.02.2014
(51) Int. Cl.: H04L 12/24, H04W 72/00, H04L 29/08

(54) **INTEGRITY CONTROL IN SERVICE CHAINING**
INTEGRITÄTSSTEUERUNG BEI DER DIENSTVERKETTUNG
CONTRÔLE D'INTÉGRITÉ DANS UN CHAÎNAGE DE SERVICES

(43) Date of publication of application: 21.12.2016
(73) Proprietor: Nokia Solutions and Networks Oy, 02610 Espoo (FI)
(72) Inventor: RÄSÄNEN, Juha Antero, FI-02660 Espoo (FI)
(74) Representative: Nokia EPO representatives
(86) International application number: PCT/EP2014/052611
(87) International publication number: WO 2015/120878

(56) References cited:
- QUINN R FERNANDO J GUICHARD S KUMAR CISCO SYSTEMS P ET AL: "Network Service Header; draft-quinn-nsh-01.txt", NETWORK SERVICE HEADER; DRAFT-QUINN-NSH-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 July 2013 (2013-07-13), pages 1-21, XP015094307, [retrieved on 2013-07-13]
- QUINN P ET AL: "Service Function Chaining Problem Statement; draft-ietf-sfc-problem-statement-00.txt", SERVICE FUNCTION CHAINING PROBLEM STATEMENT; DRAFT-IETF-SFC-PROBLEM-STATEMENT-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 29 January 2014 (2014-01-29), pages 1-18, XP015096317, [retrieved on 2014-01-29]
- BOUCADAIR C JACQUENET FRANCE TELECOM R PARKER AFFIRMED NETWORKS D LOPEZ TELEFONICA I+D J GUICHARD C PIGNATARO CISCO SYSTEMS M ET A: "Service Function Chaining: Framework & Architecture; draft-boucadair-sfc-framework-00.txt", SERVICE FUNCTION CHAINING: FRAMEWORK & ARCHITECTURE; DRAFT-BOUCADAIR-SFC-FRAMEWORK-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 3 October 2013 (2013-10-03), pages 1-24, XP015092848, [retrieved on 2013-10-03]
- INTEL CORPORATION ET AL: "Data-modelling and Service Chains alignment;NFVMAN(14)000088_Data_modelling_ and_Service_chains", ETSI DRAFT; NFVMAN(14)000088_DATA_MODELLING_AND_SERVIC E_CHAINS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, 6 February 2014 (2014-02-06), pages 1-15, XP014159965, [retrieved on 2014-02-06]
- "Network Function Virtualisation (NFV); Resiliency Requirements;Section 4 Resiliency problem description & objectives_v008_RM", ETSI DRAFT; SECTION 4 RESILIENCY PROBLEM DESCRIPTION & OBJECTIVES_V008_RM, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, 2 December 2013 (2013-12-02), pages 1-9, XP014160178, [retrieved on 2013-12-02]

## Description

### Field

The present invention relates to integrity control in service chaining. More specifically, the present invention relates to measures (including methods, apparatuses and computer program products) for enabling/realizing integrity control in service chaining, i.e. in a service chaining scenario in which a service is provided via a service chain of a plurality of service function entities.

### Background

In current communication system, the service provisioning is typically accomplished by way of relatively static models in which one service chain is used per service. That is, current service provisioning models are coupled to network topology and physical network entities, thus not allowing flexibility in service provisioning or reuse of existing components.

In an effort to increase flexibility for fast and simple service provisioning as well as to enable reuse of existing components and introduce new services and/or service functions, a general architecture for service chaining is under development, which is intended to be applicable to both fixed and mobile networks. Accordingly, various standardization bodies are working on flexible service chaining architectures. For example, service chaining is addressed by the 3GPP under the work item "Flexible Mobile Service Steering (FMSS)", by the IETF under the term "Service Function Chaining", for which a draft problem statement is created as an Inter-Draft, entitled "draft-quinn-sfc-problem-statement-02.txt", and a draft proposal for a Network Service Header for transferring service chaining related control information within network packets or frames is created as an Internet-Draft, entitled "draft-quinn-nsh-01.txt", and by the ETSI under the framework of Network Function Virtualization (NFV), e.g. in the draft "ETSI ISG NFV-MAN 001".

Generally, in service chaining (which may also be referred to as service function chaining), a service is provided via a service chain of a plurality of service function entities, each of which is configured to perform a specific service function. A service function is responsible for a specific treatment or processing of data relating to the service being provided, and it can be a virtual instance or be embedded in a physical network entity. Non-limiting examples of service functions may include, but are not limited to, Deep Packet Inspection (DPI), Network Address Translation (NAT), a firewall, service load balancing, caching, a video optimizer, or the like. Such service chain may be implemented in the form of a network overlay over any kind of underlay network, such as a physically deployed 3GPP, IETF or ETSI network system.

In service chaining, data integrity of data relating to the service being provided may however become a problem. This is essentially because the service is provided by way of the entire set of service functions in the service chain, while the individual service functions in the service chain are actually independent/separate from each other. Thus, a cooperative and/or mutually adjusted treatment or processing of data relating to the service cannot be assured.

For example, in a 3GPP environment, a gateway entity may function as a service function entity in a service chain, which performs usage monitoring and/or counting of (upstream and/or downstream) data, e.g. for charging purposes, and reports the results of the usage monitoring and/or counting for further handling/use to other network entities like e.g. PCRF, OCS or OFCS. If a service function entity residing in the service chain after the monitoring and/or counting entity drops or loses data (e.g. one or more packets) for whatever reason (e.g. due to congestion, corruption, buffering time-out, temporary failures, ...), the end-to-end application layer may notice such an event and may take corrective actions (e.g. re-sending), but the monitoring and/or counting entity does not notice such an event and may thus not take corrective actions. As a result, data (e.g. packets) that are dropped or lost within an operator's network, i.e. after passing the gateway entity, is nonetheless monitored and/or counted (and maintained in the monitoring and/or counting results) and thus reported. Accordingly, due to such inappropriate reporting, policy and/or charging control events may possibly be triggered on false grounds due to incorrect input information into the policy control system, and/or incorrect charging may possibly be caused due to incorrect input information into the charging system.

Accordingly, there is a demand for enabling/realizing integrity control in service chaining, i.e. in a service chaining scenario in which a service is provided via a service chain of a plurality of service function entities.

### Summary

Various exemplifying embodiments of the present invention aim at addressing at least part of the above issues and/or problems and drawbacks.

Various aspects of the present invention are set out in the appended claims.

Further developments and/or modifications of the aforementioned exemplary aspects of the present invention are set out in the following.

By way of exemplifying embodiments of the present invention, integrity control in service chaining, i.e. in a service chaining scenario in which a service is provided via a service chain of a plurality of service function entities, can be enabled/realized.

### Brief description of the drawings

In the following, the present invention will be described in greater detail by way of non-limiting examples with reference to the accompanying drawings, in which
Figure 1 shows a schematic diagram illustrating an example of a service chaining architecture, for which exemplifying embodiments of the present invention are applicable,
Figure 2 shows a diagram illustrating a generic procedure according to exemplifying embodiments of the present invention,
Figure 3 shows a diagram illustrating a first example of a procedure according to exemplifying embodiments of the present invention,
Figure 4 shows a diagram illustrating a second example of a procedure according to exemplifying embodiments of the present invention,
Figure 5 shows a diagram illustrating a third example of a procedure according to exemplifying embodiments of the present invention,
Figure 6 shows a diagram illustrating a fourth example of a procedure according to exemplifying embodiments of the present invention,
Figure 7 shows a schematic diagram illustrating an example of a structure of apparatuses according to exemplifying embodiments of the present invention, and
Figure 8 shows a schematic diagram illustrating another example of a structure of apparatuses according to exemplifying embodiments of the present invention.

### Detailed description

The present invention is described herein with reference to particular non-limiting examples and to what are embodiments of the present invention.

It is to be noted that the following description of the present invention and its embodiments mainly refers to specifications being used as non-limiting examples for certain exemplifying network configurations and system deployments. Namely, the present invention and its embodiments are mainly described in relation to 3GPP specifications (and IETF/ETSI specifications) being used as non-limiting examples for certain exemplifying network configurations and system deployments. In particular, for explaining applicability of exemplifying embodiments of the present invention in an illustrative manner, an EPC-based system is used as a non-limiting example of a potential underlay network system for service chaining. As such, the description of exemplifying embodiments given herein specifically refers to terminology which is directly related thereto. Such terminology is only used in the context of the presented non-limiting examples and embodiments, and does naturally not limit the invention in any way. Rather, any other network configuration or system deployment, etc. may also be utilized as long as complying with what is described herein.

Hereinafter, various implementations of the present invention and its aspects are described using several variants and/or alternatives. It is generally to be noted that, according to certain needs and constraints, all of the described variants and/or alternatives may be provided alone or in any conceivable combination (also including combinations of individual features of the various variants and/or alternatives). In this description, the words "comprising" and "including" should be understood as not limiting the described exemplifying embodiments and implementations to consist of only those features that have been mentioned, and such exemplifying embodiments and implementations may also contain features, structures, units, modules etc. that have not been specifically mentioned.

In the drawings, it is to be noted that lines/arrows interconnecting individual blocks or entities are generally meant to illustrate an operational coupling there-between, which may be a physical and/or logical coupling, which on the one hand is implementation-independent (e.g. wired or wireless) and on the other hand may also comprise an arbitrary number of intermediary functional blocks or entities not shown.

According to exemplifying embodiments of the present invention, in general terms, there are provided measures and mechanisms for enabling/realizing integrity control in service chaining, i.e. in a service chaining scenario in which a service is provided via a service chain of a plurality of service function entities (which may e.g. also be referred to as service enablers, function entities, function nodes, service nodes, or the like).

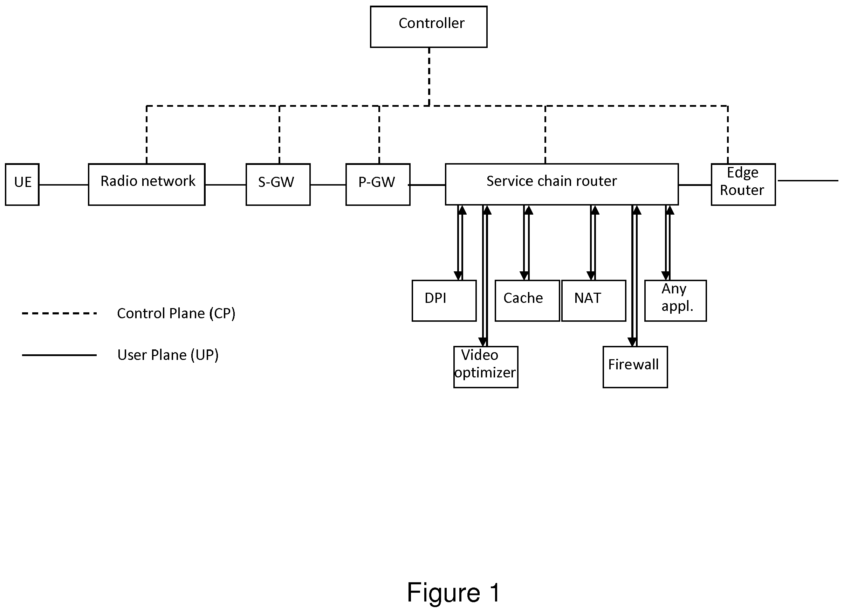

Figure 1 shows a schematic diagram illustrating an example of a service chaining architecture, for which exemplifying embodiments of the present invention are applicable. The example architecture of Figure 1 is exemplarily based on an EPC system architecture (and is applicable in the framework of FMSS), while exemplifying embodiments of the present invention are equally applicable to any other system architecture, such as an IETF system architecture (under the framework of Service Function Chaining) or ETSI system architecture (under the framework of NFV).

As shown in Figure 1, an underlay network system based on an EPC system architecture may comprise radio network entities (of a radio network), a serving gateway entity (S-GW), a packet data network gateway entity (P-GW), a service chain router and an edge router. A service chain may comprise all user plane handling entities, i.e. the radio network entities, S-GW, P-GW, service chain router, DPI, video optimizer, cache, NAT, firewall, any (other) application and the edge router, or just some of these. As shown in Figure 1, all, or at least some, of the user plane handling entities may be controlled by a controlling entity (denoted as controller) on the control plane, i.e. by a control protocol or via a control interface.

It is to be noted that the example service chaining architecture of Figure 1 is depicted for illustrative purposes only, and the present invention is not limited thereto. For example, while shown separately in Figure 1, some service functions or service function entities may be integrated, e.g. the P-GW may also contain the service chain router or at least part of its associated service functions. Also, there may be more than one controlling entity configured to control the various service function entities.

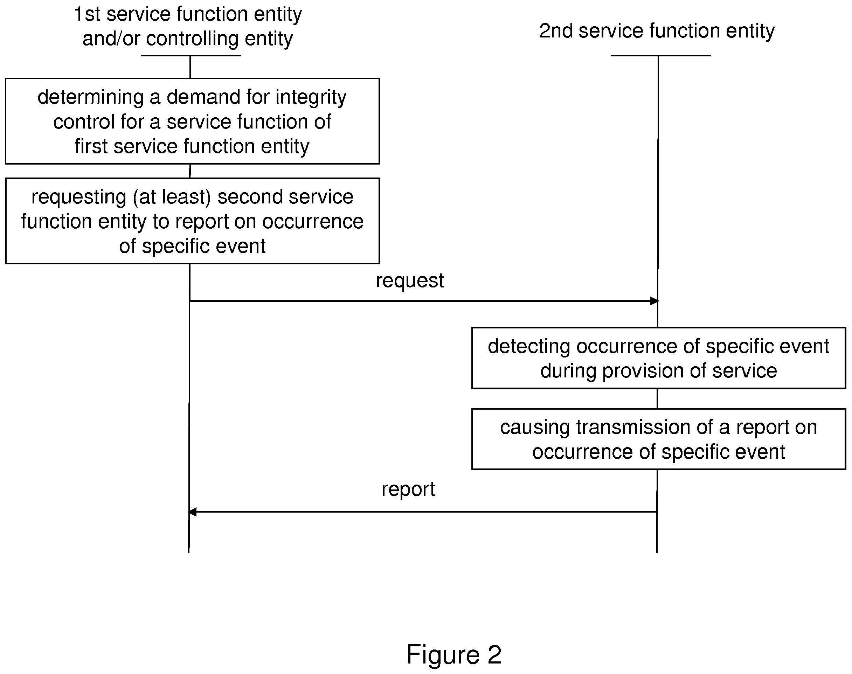

Figure 2 shows a diagram illustrating a generic procedure according to exemplifying embodiments of the present invention.

As shown in Figure 2, a generic procedure according to exemplifying embodiments of the present invention is carried out between a first service function entity and/or controlling entity on the one side and a second service function entity on the other side. For example, in an example architecture based on an EPC system architecture, such as that of Figure 1, the functionalities of the one side may be implemented/embodied by a P-GW representing a service function entity of a service chain, a network management entity or PCRF representing a controlling entity, or a combination/cooperation of these, and the functionalities of the other side may be implemented/embodied by any one of other service function entities of the service chain, such as the DPI, the video optimizer, the cache, the NAT, the firewall, or any (other) application.

As shown in Figure 2, a generic procedure according to exemplifying embodiments of the present invention comprises, on the one side, an operation of determining a demand for integrity control for a service function of a service function entity (referred to as the first service function entity) in a service chaining scenario in which a service is provided via a service chain of a plurality of service function entities, and an operation of requesting one or more of the plurality of service function entities in the service chain other than said service function entity (referred to as the second service function entity) to report on occurrence of a specific event during provision of said service, the specific event being relevant for said service function of said service function entity. Accordingly, a corresponding request is transmitted from the one side to the other side. Further, a generic procedure according to exemplifying embodiments of the present invention comprises, on the other side, an operation of receiving a request for reporting on occurrence of a specific event during provision of a service in a service chaining scenario in which a service is provided via a service chain of a plurality of service function entities, the specific event being relevant for a service function one service function entity (referred to as the first service function entity) out of the plurality of service function entities, an operation of detecting occurrence of the specific event during provision of said service, and an operation of causing transmission of at least one report on occurrence of the specific event during provision of said service. Accordingly, a corresponding report is transmitted from the other side to the one side.

It is to be noted that the example procedure of Figure 2 is depicted for illustrative purposes only, and the present invention is not limited thereto. For example, while a single first service function entity and a single second function entity are referenced in Figure 2, their number is not limited. Rather, a corresponding procedure may apply to integrity control of plural (first) function entities (i.e. plural service functions), and/or a corresponding reporting may be instructed/performed by plural (second) service function entities (e.g. for each of the first service function entities).

According to exemplifying embodiments of the present invention, the requesting/instructing for reporting on occurrence of the specific event may comprise various settings and/or parameters. For example, a corresponding request/instruction may comprise one or more of a reporting time setting indicating a time point or interval for reporting upon occurrence of the specific event, a reporting condition setting indicating at least one service-related condition for reporting on occurrence of the specific event, and a reporting type setting indicating a type of report and/or report communication on occurrence of the specific event. Accordingly, the corresponding reporting on occurrence of the specific event is based on these various settings and/or parameters. For example, a corresponding report may be (caused to be) transmitted in accordance with the at least one of the indicated time point or interval, the at least one indicated service-related condition, and the indicated type of report and/or report communication, which is comprised in a corresponding reporting request/instruction.

As an example of a reporting time setting, a timer value may be used to indicate the longest delay before reporting the specific event and/or related information, e.g. in order to allow the report receiving entity to deduce when certain data has passed the service chain and can be reported as monitored/counted data to further network entities (e.g. PCRF, charging entities), or an instruction/indication to report on occurrence of the specific event only at the end of a (service provisioning or communication) session can be used. As an example of a reporting condition setting, information regarding (end-to-end) application, QoS, protocol, media, service provision or data communication direction (i.e. upstream or downstream), or the like may be used, e.g. in order to enable a different reporting handling (e.g. reporting or not reporting, different reporting timing) for different cases of reporting conditions. As an example of a reporting type setting, an instruction or indication of a type of reporting message (e.g. a control protocol/plane or out-of-band message or a user protocol/plane or in-band message) or a type/way of report delivery (e.g. via a controlling entity or via service function entities of the service chain) may be used.

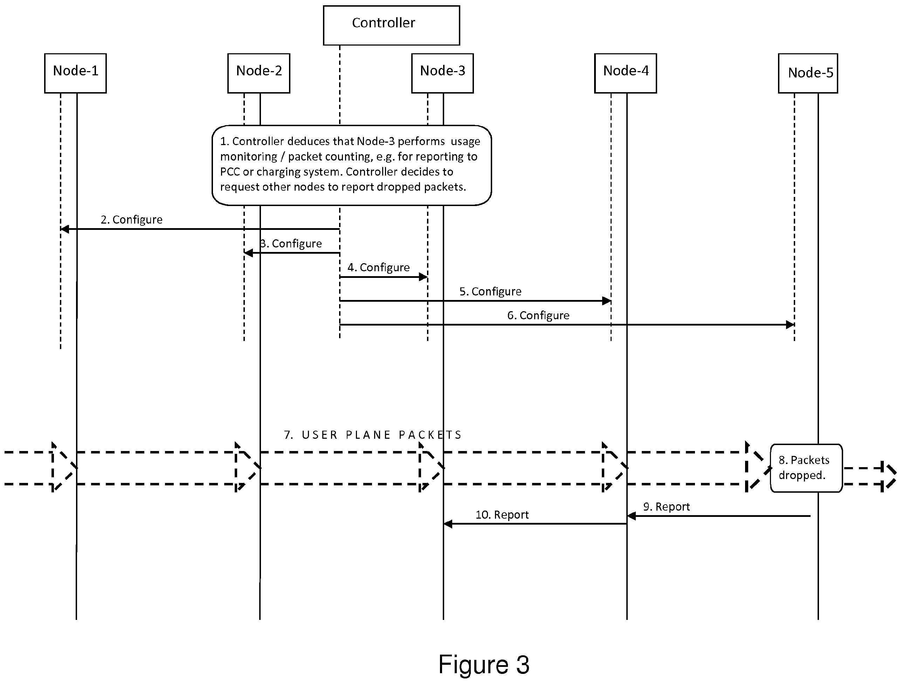

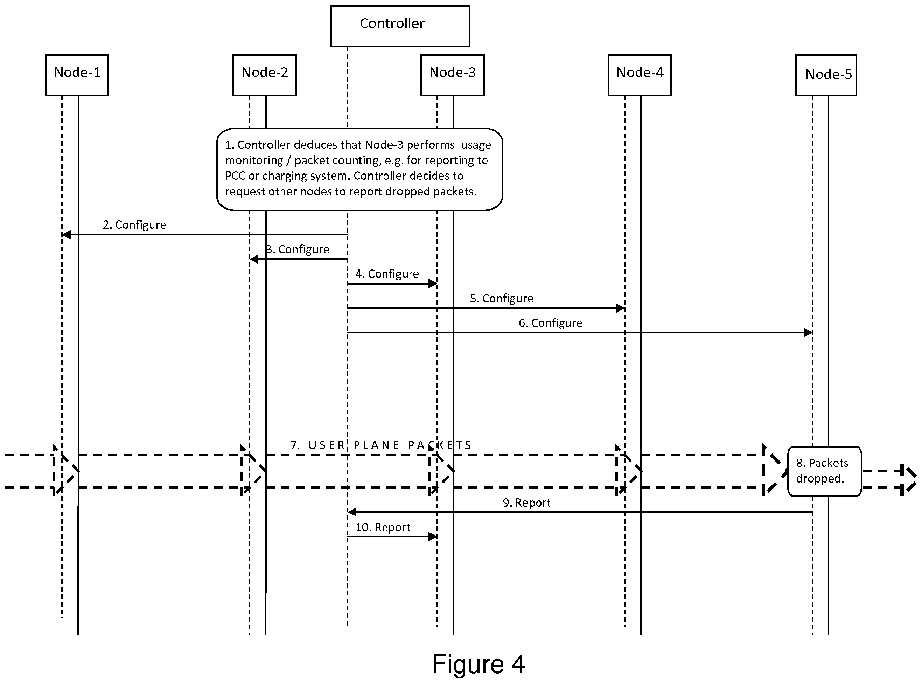

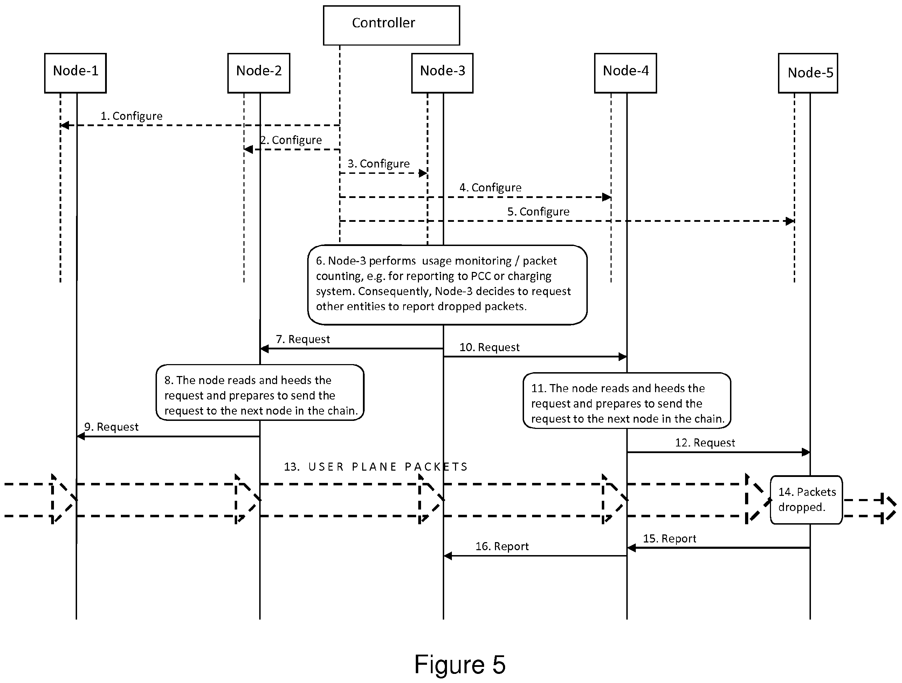

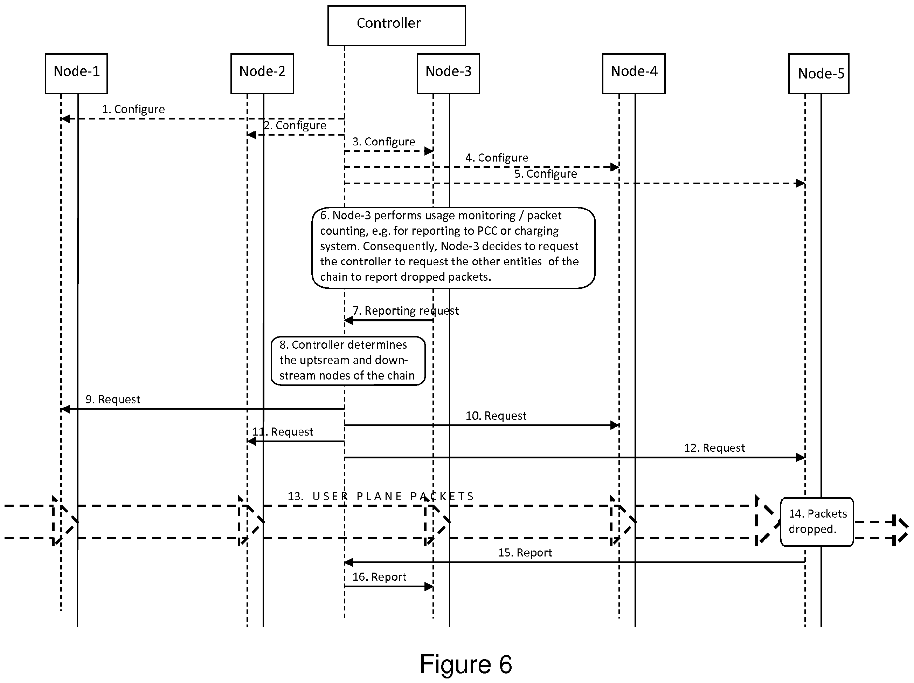

According to exemplifying embodiments of the present invention, there are various ways to originate or generate one or more reporting requests. On the one hand, as illustrated in the use cases of Figures 3 and 4, a controlling entity, i.e. a network entity controlling the service function entities of the service chain, may be aware of the service function entity or service function entities that need to receive reports about a specific service-related event, and the controlling entity may instruct the other service function entities to report accordingly. The corresponding instructions may be given e.g. in conjunction with configuring the service function entities as parts of the service chain, or with separate commands/messages. On the one hand, as illustrated in the use cases of Figures 5 and 6, a service function entity that needs to receive reports about a specific service-related event may initiate a corresponding reporting request. The corresponding instructions may be sent via a controlling entity or directly to the other service function entities.

According to exemplifying embodiments of the present invention, there are various ways to transport, provide or communicate one or more reporting requests. Firstly, as illustrated in the use cases of Figures 3 and 4, a controlling entity may transmit the request to service function entities using a control protocol message on the control interface between the controlling entity and each service function entity or an out-of-band/channel transport mechanism. Secondly, as illustrated in the use cases of Figure 5, a service function entity that needs to receive reports about a specific service-related event may transmit the request to other service function entities using a user plane message between the service function entities or an in-band/channel transport mechanism, e.g. as a part/field of an IP packet, which may be dedicated for the purpose or being a piggy-packed/combined packet. Such way of transporting, providing or communicating a reporting request can adopt a mechanism based on a Network Service Header for transferring service chaining related control information within network packets or frames, such as defined in the aforementioned IETF Internet-Draft entitled "draft-quinn-nsh-01.txt". Thirdly, as illustrated in the use cases of Figure 6, a service function entity that needs to receive reports about a specific service-related event may transmit the request to a controlling entity using a control protocol message on the control interface between the controlling entity and this service function entity or an out-of-band/channel transport mechanism, and the controlling entity may then transmit the request further to other service function entities using a control protocol message on the control interface between the controlling entity and each service function entity or an out-of-band/channel transport mechanism.

According to exemplifying embodiments of the present invention, there are various ways to transport, provide or communicate one or more reports from a reporting entity to the report requesting entity. On the one hand, as illustrated in Figures 3 and 5, the reporting entity may transmit the report backwards over the service chain using a user plane message between the service function entities or an in-band/channel transport mechanism, e.g. as a part/field of an IP packet, which may be dedicated for the purpose or being a piggy-packed/combined packet. Such way of transporting, providing or communicating a report can adopt a mechanism based on a Network Service Header for transferring service chaining related control information within network packets or frames, such as defined in the aforementioned IETF Internet-Draft entitled "draft-quinn-nsh-01.txt". In this regard, a preceding service function entity forwards the packet (i.e. the report) backwards over the service chain until the report reaches the report requesting entity. The report requesting entity uses the information carried by the packet. If the packet is dedicated for the reporting purpose, the report requesting entity does not transmit the packet further, unless there are other report requesting entities backwards in the service chain. If the packet is a piggy-packed/combined packet, the report requesting entity may drop or nullify the reported information (unless there are other report requesting entities backwards in the service chain) before transmitting the packet further. On the other hand, as illustrated in Figures 4 and 6, the reporting entity may transmit the report backwards to the controller using a control protocol message on the control interface between the controlling entity and the reporting entity or an out-of-band/channel transport mechanism, and the controller may then transmit the report further to the report requesting entity using a control protocol message on the control interface between the controlling entity and the report requesting entity or an out-of-band/channel transport mechanism.

According to exemplifying embodiments of the present invention, any kind of service function is applicable to integrity control (e.g. DPI, NAT, firewall, service load balancing, caching, video optimizer, or the like), any kind of service function entity configured to perform such service function is applicable as a first service function entity, any specific event is applicable, as long as being related to or relevant for the service function in question, and any kind of reporting contents is applicable, as long as being indicative of information regarding the specific event, which is relevant for the handling/processing of the service function in question.

In the following, exemplifying embodiments of the present invention are described by way of certain illustrative and non-limiting examples with reference to Figures 3 to 6.

In these examples, a service chaining scenario for service provisioning is exemplarily adopted, in which a service chain comprises five service function entities (denoted as Node-1 to Node-5) and a controlling entity (denoted as controller) configured to control one or more of the plurality of service function entities in the service chain. Further, a use case is exemplarily adopted, in which the service function in question comprises at least one of usage monitoring and data counting in the provision of said service, the service function entity performing this service function is Node-3 of a service chain for service provisioning, the specific event comprises dropping or loss of data relating to the service being provided, the specific event is assumed to occur at Node-5 (while it might equally occur at any one of Node-1, Node-2 and Node-4), and a report comprises at least one of an identification and an amount of the dropped or lost data relating to the service being provided.

In Figures 3 to 6, a user plane (and its associated functionality) of any entity is illustrated with respect to (blocks located at and/or arrows extending between) vertical solid lines, and a control plane (and its associated functionality) of any entity is illustrated with respect to (blocks located at and/or arrows extending between) vertical dashed lines.

Figure 3 shows a diagram illustrating a first example of a procedure according to exemplifying embodiments of the present invention. The example procedure of Figure 3 illustrates a use case in which reporting requests are originated from a controlling entity and reporting is effected on the user plane.

As shown in Figure 3, in step 1, the controller determines a demand for integrity control for a service function of Node-3 by deducing that Node-3 performs usage monitoring and/or packet counting, e.g. for reporting to PCC or charging system, i.e. a service function for provision of said service, which requires integrity control, and deciding to request reporting on occurrence of packet drop/loss, i.e. a specific event based on the deduced service function of Node-3. Namely, the controller decides to request other service function entities to report e.g. the amount of data/packets relating to the service being provided, which have already passed Node-3 but are dropped by or lost at a subsequent service function entity in the service chain.

In steps 2 to 6, the controller may transmit corresponding configuration messages to the nodes of the service chain based on such determination. Specifically, in steps 2, 3, 5 and 6, the controller sends a configuration message to Node-1, Node-2, Node-4 and Node-5 for requesting these nodes to report on dropped or lost data/packets during service provisioning, respectively. In step 4, the controller may transmit a configuration message to Node-3, if needed, in order to inform Node-3 about at least one of the deduced demand for integrity control and the requested reporting. Namely, this configuration message may e.g. indicate that reports about dropped or lost data/packets are to be expected, and/or suggest or indicate the way or ways how the reporting can be performed. Although not shown in Figure 3, Node-3 may respond to this configuration message, e.g. by way of a confirmation or the like.

In step 7, user plane data/packets are transported through the service chain for service provisioning. During such service provisioning, in step 8, data/packets relating to the service being provided are dropped or lost, and Node-5 detects the drop or loss of data/packets, i.e. occurrence of the specific event according to the controller's configuration message of step 6.

In step 9, Node-5 causes transmission of at least one report on occurrence of the specific event during provision of said service, i.e. the dropped or lost data/packets to Node-4 using a user plane or in-band message. In step 10, Node-4 forwards the report from Node-5 to Node-3 using a user plane or in-band message. That is, the report on occurrence of the specific event is transported over the service chain via at least one of the plurality of service function entities, i.e. Node-4, to the service function entity in question, i.e. Node-3.

Figure 4 shows a diagram illustrating a second example of a procedure according to exemplifying embodiments of the present invention. The example procedure of Figure 4 illustrates a use case in which reporting requests are originated from a controlling entity and reporting is effected on the control plane.

As shown in Figure 4, in step 1, the controller determines a demand for integrity control for a service function of Node-3 by deducing that Node-3 performs usage monitoring and/or packet counting, e.g. for reporting to PCC or charging system, i.e. a service function for provision of said service, which requires integrity control, and deciding to request reporting on occurrence of packet drop/loss, i.e. a specific event based on the deduced service function of Node-3. Namely, the controller decides to request other service function entities to report e.g. the amount of data/packets relating to the service being provided, which have already passed Node-3 but are dropped by or lost at a subsequent service function entity in the service chain.

In steps 2 to 6, the controller may transmit corresponding configuration messages to the nodes of the service chain based on such determination. Specifically, in steps 2, 3, 5 and 6, the controller sends a configuration message to Node-1, Node-2, Node-4 and Node-5 for requesting these nodes to report on dropped or lost data/packets during service provisioning, respectively. In step 4, the controller may transmit a configuration message to Node-3, if needed, in order to inform Node-3 about at least one of the deduced demand for integrity control and the requested reporting. Namely, this configuration message may e.g. indicate that reports about dropped or lost data/packets are to be expected, and/or suggest or indicate the way or ways how the reporting can be performed. Although not shown in Figure 4, Node-3 may respond to this configuration message, e.g. by way of a confirmation or the like.

In step 7, user plane data/packets are transported through the service chain for service provisioning. During such service provisioning, in step 8, data/packets relating to the service being provided are dropped or lost, and Node-5 detects the drop or loss of data/packets, i.e. occurrence of the specific event according to the controller's configuration message of step 6.

In step 9, Node-5 causes transmission of at least one report on occurrence of the specific event during provision of said service, i.e. the dropped or lost data/packets, to the controller using a control plane or out-of-band message. In step 10, the controller forwards the report from Node-5 to Node-3 using a control plane or out-of-band message, thus notifying Node-3 of the at least one received report. That is, the report on occurrence of the specific event is not transported over the service chain, but over a control interface or control protocol between service function entities, i.e. Node-5 and Node-3, and the controller.

Accordingly, the procedure of Figure 4 corresponds to the procedure of Figure 3 in terms of the functionalities in steps 1 to 8, but deviates from the procedure of Figure 3 in terms of the functionalities in steps 9 and 10.

Figure 5 shows a diagram illustrating a third example of a procedure according to exemplifying embodiments of the present invention. The example procedure of Figure 5 illustrates a use case in which reporting requests are originated from a service function entity subject to integrity control and reporting is effected on the user plane.

As shown in Figure 5, in steps 1 to 5, the controller may control the service chain by transmitting corresponding configuration messages to the nodes of the service chain. Specifically, the controller may send a configuration message to Node-1, Node-2, Node-3, Node-4 and Node-5 for configuring or managing the service chain, respectively.

In step 6, Node-3 performs usage monitoring and/or packet counting, e.g. for reporting to PCC or charging system, i.e. a service function for provision of said service, which requires integrity control. Based thereon, in step 6, Node-3 determines a demand for integrity control for its performed service function by deciding to request reporting on occurrence of packet drop/loss, i.e. a specific event based on its performed service function. Namely, Node-3 decides to request other service function entities to report e.g. the amount of data/packets relating to the service being provided, which have already passed Node-3 but are dropped by or lost at a subsequent service function entity in the service chain.

In steps 7 and 10, Node-3 causes transmission of and transmits corresponding request messages to the neighboring nodes of the service chain in at least one direction (i.e. downstream and/or upstream) based on such determination. Specifically, Node-3 causes transmission of and transmits a request message to Node-2 and Node-4 for requesting these nodes to report on dropped or lost data/packets during service provisioning, respectively. These requests, which are transmitted using user plane or in-band messages, are further handled by Node-2 and Node-4, respectively. On the downstream side, in step 8, Node-2 reads and heeds the request from Node-3, as provided in step 7, and prepares to transmit the request to the next node in the service chain in the downstream direction, i.e. Node-1. Then, in step 9, Node-2 transmits the request further to Node-1. On the upstream side, in step 11, Node-4 reads and heeds the request from Node-3, as provided in step 10, and prepares to transmit the request to the next node in the service chain in the upstream direction, i.e. Node-5. Then, in step 12, Node-4 transmits the request further to Node-5.

In step 13, user plane data/packets are transported through the service chain for service provisioning. During such service provisioning, in step 14, data/packets relating to the service being provided are dropped or lost, and Node-5 detects the drop or loss of data/packets, i.e. occurrence of the specific event according to Node-3's configuration message, as provided from Node-4 in step 12.

In step 15, Node-5 causes transmission of at least one report on occurrence of the specific event during provision of said service, i.e. the dropped or lost data/packets to Node-4 using a user plane or in-band message. In step 16, Node-4 forwards the report from Node-5 to Node-3 using a user plane or in-band message. That is, the report on occurrence of the specific event is transported over the service chain via at least one of the plurality of service function entities, i.e. Node-4, to the service function entity in question, i.e. Node-3.

Figure 6 shows a diagram illustrating a fourth example of a procedure according to exemplifying embodiments of the present invention. The example procedure of Figure 6 illustrates a use case in which reporting requests are originated from a service function entity subject to integrity control and reporting is effected on the control plane.

As shown in Figure 6, in steps 1 to 5, the controller may control the service chain by transmitting corresponding configuration messages to the nodes of the service chain. Specifically, the controller may send a configuration message to Node-1, Node-2, Node-3, Node-4 and Node-5 for configuring or managing the service chain, respectively.

In step 6, Node-3 performs usage monitoring and/or packet counting, e.g. for reporting to PCC or charging system, i.e. a service function for provision of said service, which requires integrity control. Based thereon, in step 6, Node-3 determines a demand for integrity control for its performed service function by deciding to request reporting on occurrence of packet drop/loss, i.e. a specific event based on its performed service function. Namely, Node-3 decides to request other service function entities to report e.g. the amount of data/packets relating to the service being provided, which have already passed Node-3 but are dropped by or lost at a subsequent service function entity in the service chain.

In step 7, Node-3 causes transmission of and transmits a corresponding request message to the controller based on such determination. Specifically, Node-3 causes transmission of and transmits a request message to the controller for requesting the controller to report on dropped or lost data/packets during service provisioning. This request is transmitted using a control plane or out-of-band message, i.e. over a control interface or control protocol between Node-3 and the controller. This request may be in response to the configuration message, as provided from the controller in step 3, but may equally be sent as a separate message independent of any previous message from the controller.

In step 8, the controller may determine or identify nodes in the service chain in at least one direction (i.e. downstream and/or upstream) with respect to requesting Node-3 based on the reporting request.

In steps 9 to 12, the controller transmits corresponding request messages to the relevant nodes of the service chain based on reporting request. Specifically, the controller sends a request message to Node-1, Node-2, Node-4 and Node-5 for requesting these nodes to report on dropped or lost data/packets during service provisioning, respectively. These requests are transmitted using a control plane or out-of-band message, i.e. over a control interface or control protocol between the controller and any one of Node-1, Node-2, Node-4 and Node-5.

In step 13, user plane data/packets are transported through the service chain for service provisioning. During such service provisioning, in step 14, data/packets relating to the service being provided are dropped or lost, and Node-5 detects the drop or loss of data/packets, i.e. occurrence of the specific event according to the controllers request message in step 12.

In step 15, Node-5 causes transmission of at least one report on occurrence of the specific event during provision of said service, i.e. the dropped or lost data/packets, to the controller using a control plane or out-of-band message. In step 16, the controller forwards the report from Node-5 to Node-3 using a control plane or out-of-band message, thus notifying Node-3 of the at least one received report. That is, the report on occurrence of the specific event is not transported over the service chain, but over a control interface or control protocol between service function entities, i.e. Node-5 and Node-3, and the controller.

Accordingly, the procedure of Figure 6 corresponds to the procedure of Figure 5 in terms of the functionalities in steps 1 to 6 and steps 13 and 14, but deviates from the procedure of Figure 5 in terms of the functionalities in steps 7 to 12 and steps 15 to 16.

It is to be noted that the foregoing description of exemplifying embodiments of the present invention is made for illustrative purposes only, and the present invention is not limited thereto. With respect to Figures 3 to 6, it is to be noted that the order of the messages may be different in certain exemplifying embodiments of the present invention. For example, the controller may first contact and configure the reporting nodes of the service chain, e.g. to find out which ways of reporting they support, and only after that contact the report requesting node subject to integrity control, and suggest or indicate a way or ways of reporting, or vice versa. For example, while all service function entities not subject to integrity control are described to be requested/instructed for an event reporting, only a subset thereof may be requested/instructed accordingly (e.g. depending on any conceivable reporting condition such as type of service, service provisioning direction, individual entity/node properties, or the like).

By virtue of exemplifying embodiments of the present invention, as evident from the above, integrity control in service chaining, i.e. in a service chaining scenario in which a service is provided via a service chain of a plurality of service function entities, can be enabled/realized. Accordingly, an appropriate and error-free service function and/or service provisioning can be enabled/realized. For example, in view of the above example use cases, an appropriate and error-free charging, accounting and usage monitoring can be enabled/realized in that it can be avoided that any inappropriate reporting, policy and/or charging control events are triggered on false grounds due to incorrect input information into the policy control system, and/or incorrect charging is caused due to incorrect input information into the charging system.

The above-described methods, procedures and functions may be implemented by respective functional elements, entities, modules, units, processors, or the like, as described below.

While in the foregoing exemplifying embodiments of the present invention are described mainly with reference to methods, procedures and functions, corresponding exemplifying embodiments of the present invention also cover respective apparatuses, entities, modules, units, network nodes and/or systems, including both software and/or hardware thereof.

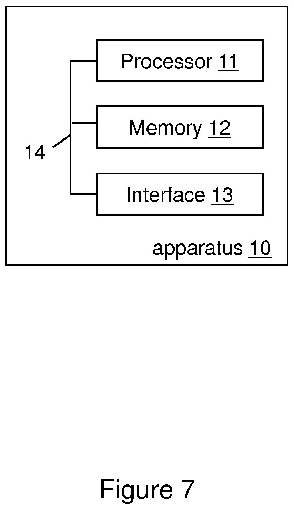

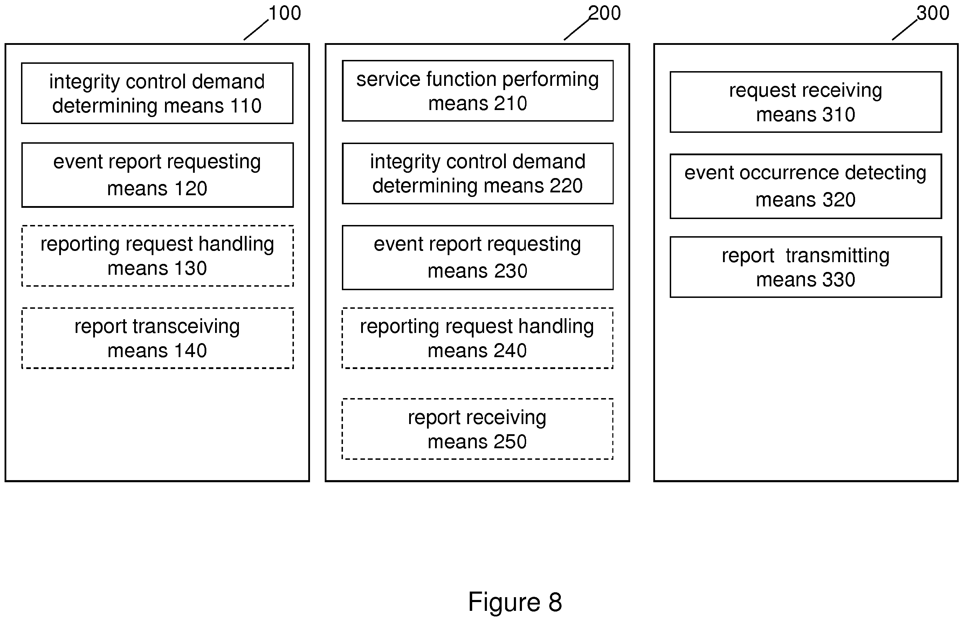

Respective exemplifying embodiments of the present invention are described below referring to Figures 7 and 8, while for the sake of brevity reference is made to the detailed description of respective corresponding configurations/setups, schemes, methods and functionality, principles and operations according to Figures 1 to 6.

Figure 7 shows a schematic diagram illustrating an example of a structure of apparatuses according to exemplifying embodiments of the present invention.

In Figure 7, the solid line blocks are basically configured to perform respective methods, procedures and/or functions as described above. The entirety of solid line blocks are basically configured to perform the methods, procedures and/or functions as described above, respectively. With respect to Figure 7, it is to be noted that the individual blocks are meant to illustrate respective functional blocks implementing a respective function, process or procedure, respectively. Such functional blocks are implementation-independent, i.e. may be implemented by means of any kind of hardware or software or combination thereof, respectively.

Further, in Figure 7, only those functional blocks are illustrated, which relate to any one of the above-described methods, procedures and/or functions. A skilled person will acknowledge the presence of any other conventional functional blocks required for an operation of respective structural arrangements, such as e.g. a power supply, a central processing unit, respective memories or the like. Among others, one or more memories are provided for storing programs or program instructions for controlling or enabling the individual functional entities or any combination thereof to operate as described herein in relation to exemplifying embodiments.

As indicated in Figure 7, according to exemplifying embodiments of the present invention, an apparatus 10 may comprise at least one processor 11 and at least one memory 12 (and possibly also at least one interface 13), which may be operationally connected or coupled, for example by a bus 14 or the like, respectively.

The processor 11 and/or the interface 13 of the apparatus 10 may also include a modem or the like to facilitate communication over a (hardwire or wireless) link, respectively. The interface 13 of the apparatus 10 may include a suitable transmitter, receiver or transceiver connected or coupled to one or more antennas, antenna units, such as antenna arrays or communication facilities or means for (hardwire or wireless) communications with the linked, coupled or connected device(s), respectively. The interface 13 of the apparatus 10 is generally configured to communicate with at least one other apparatus, device, node or entity (in particular, the connector thereof).

The memory 12 of the apparatus 10 may represent a (non-transitory/tangible) storage medium and store respective programs, program products, macros or applets, etc. or parts of them, which may be assumed to comprise program instructions or computer program code that, when executed by the respective processor, enables the respective electronic device or apparatus to operate in accordance with the exemplifying embodiments of the present invention.

In general terms, respective apparatuses (and/or parts thereof) may represent means for performing respective operations and/or exhibiting respective functionalities, and/or the respective devices (and/or parts thereof) may have functions for performing respective operations and/or exhibiting respective functionalities.

In view of the above, the thus illustrated apparatus 10 is suitable for use in practicing one or more of the exemplifying embodiments of the present invention, as described herein.

When in the subsequent description it is stated that the processor (or some other means) is configured to perform some function, this is to be construed to be equivalent to a description stating that a (i.e. at least one) processor or corresponding circuitry, potentially in cooperation with a computer program code stored in the memory of the respective apparatus or otherwise available (it should be appreciated that the memory may also be an external memory or provided/realized by a cloud service or the like), is configured to cause the apparatus to perform at least the thus mentioned function.

The thus illustrated apparatus 10 may represent or realize/embody a (part of a) controlling entity according to exemplifying embodiments of the present invention, such as the controller of Figures 3 to 6, and it may be configured to perform a procedure and/or exhibit a functionality as described (for the controlling entity) in Figures 2 to 6.

In this case, the apparatus 10 may be caused or the apparatus 10 or its processor 11 (possibly together with computer program code stored in the memory 12), in its most basic form, is configured to perform or cause determining a demand for integrity control for a service function of a service function entity in a service chaining scenario in which a service is provided via a service chain of a plurality of service function entities, and requesting one or more of the plurality of service function entities in the service chain other than said service function entity to report on occurrence of a specific event during provision of said service, the specific event being relevant for said service function of said service function entity.

The thus illustrated apparatus 10 may represent or realize/embody a (part of a) service function entity subject to integrity control, i.e. a report requesting entity, according to exemplifying embodiments of the present invention, such as Node-3 of Figures 3 to 6, and it may be configured to perform a procedure and/or exhibit a functionality as described (for the service function entity subject to integrity control) in any one of Figures 2 to 6.

In this case, the apparatus 10 may be caused or the apparatus 10 or its processor 11 (possibly together with computer program code stored in the memory 12), in its most basic form, is configured to perform or cause performing a service function of a service function entity in a service chaining scenario in which a service is provided via a service chain of a plurality of service function entities, determining a demand for integrity control for said service function of said service function entity, and requesting one or more of the plurality of service function entities in the service chain other than said service function entity to report on occurrence of a specific event during provision of said service, the specific event being relevant for said service function of said service function entity.

The thus illustrated apparatus 10 may represent or realize/embody a (part of a) service function entity not subject to integrity control, i.e. a reporting entity, according to exemplifying embodiments of the present invention, such as Node-5 of Figures 3 to 6, and it may be configured to perform a procedure and/or exhibit a functionality as described (for the service function entity not subject to integrity control) in any one of Figures 2 to 6.

In this case, the apparatus 10 may be caused or the apparatus 10 or its processor 11 (possibly together with computer program code stored in the memory 12), in its most basic form, is configured to perform or cause receiving a request for reporting on occurrence of a specific event during provision of a service in a service chaining scenario in which a service is provided via a service chain of a plurality of service function entities, the specific event being relevant for a service function one service function entity out of the plurality of service function entities, detecting occurrence of the specific event during provision of said service, and causing transmission of at least one report on occurrence of the specific event during provision of said service.

For further details regarding the operability/functionality of the individual apparatuses according to exemplifying embodiments of the present invention, reference is made to the above description in connection with any one of Figures 1 to 6, respectively.

As mentioned above, any apparatus according to exemplifying embodiments of the present invention may be structured by comprising respective means for performing corresponding operations, procedures and/or functions. For example, such means may be implemented/realized on the basis of an apparatus structure, as exemplified in Figure 7, i.e. by one or more processors 11, one or more memories 12, one or more interfaces 13, or any combination thereof.

Figure 8 shows a schematic diagram illustrating another example of a structure of apparatuses according to exemplifying embodiments of the present invention.

As shown in Figure 8, an apparatus 100 according to exemplifying embodiments of the present invention may be operable as a controlling entity. The apparatus 100 may comprise (at least) means for determining a demand for integrity control for a service function of a service function entity in a service chaining scenario in which a service is provided via a service chain of a plurality of service function entities (denoted as integrity control demand determining means 110), and means for requesting one or more of the plurality of service function entities in the service chain other than said service function entity to report on occurrence of a specific event during provision of said service, the specific event being relevant for said service function of said service function entity (denoted as event report requesting means 120).

According to exemplifying embodiments, as described above, it is to be noted that the apparatus 100 may further comprise one or more of means for handling a reporting request, i.e. for transmitting a request for reporting on occurrence of the specific to service function entities and/or receiving a request for reporting on occurrence of the specific event during provision of said service from a service function entity (denoted as reporting request handling means 130), and means for transceiving a report, i.e. for receiving a report on occurrence of the specific event during provision of said service from at least one service function entity and notifying a service function entity of the at least one received report (denoted as report transceiving means 140).

As shown in Figure 8, an apparatus 200 according to exemplifying embodiments of the present invention may be operable as a service function entity subject to integrity control, i.e. a report requesting entity. The apparatus 200 may comprise (at least) means for performing a service function of a service function entity in a service chaining scenario in which a service is provided via a service chain of a plurality of service function entities (denoted as service function performing means 210), means for determining a demand for integrity control for said service function of said service function entity (denoted as integrity control demand determining means 220), and means for requesting one or more of the plurality of service function entities in the service chain other than said service function entity to report on occurrence of a specific event during provision of said service, the specific event being relevant for said service function of said service function entity (denoted as event report requesting means 230).

According to exemplifying embodiments, as described above, it is to be noted that the apparatus 200 may further comprise one or more of means for handling a reporting request, i.e. for transmitting a request for reporting on occurrence of the specific event during provision of said service to another service function entity or a controlling entity (denoted as report request handling means 240), and means for receiving a report on occurrence of the specific event during provision of said service from another service function entity or a controlling entity (denoted as report receiving means 250).

As shown in Figure 8, an apparatus 300 according to exemplifying embodiments of the present invention may be operable as a service function entity not subject to integrity control, i.e. a reporting entity. The apparatus 300 may comprise (at least) means for receiving a request for reporting on occurrence of a specific event during provision of a service in a service chaining scenario in which a service is provided via a service chain of a plurality of service function entities, the specific event being relevant for a service function one service function entity out of the plurality of service function entities (denoted as request receiving means 310), means for detecting occurrence of the specific event during provision of said service (denoted as event occurrence detecting means 320), and means for causing transmission of at least one report on occurrence of the specific event during provision of said service (denoted as report transmitting means 330).

According to exemplifying embodiments of the present invention, any one of the processor, the memory and the connector, as well as any one of the means, may be implemented as individual modules, chips, chipsets, circuitries or the like, or one or more of them can be implemented as a common module, chip, chipset, circuitry or the like, respectively.

According to exemplifying embodiments of the present invention, a system may comprise any conceivable combination of the thus depicted devices/apparatuses and other network elements, which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention is defined by the claims as appended.

Even though the invention is described above with reference to the examples according to the accompanying drawings, it is to be understood that the invention is not restricted thereto. Rather, it is apparent to those skilled in the art that the present invention can be modified in many ways without departing from the scope of the invention as claimed.

### List of acronyms and abbreviations

- 3GPP: 3^{rd} Generation Partnership Project
- DPI: Deep Packet Inspection
- EPC: Evolved Packet Core
- ETSI: European Telecommunications Standards Institute
- FMSS: Flexible Mobile Service Steering
- IETF: Internet Engineering Task Force
- IP: Internet Protocol
- ISG: Industry Specification Group
- MAN: Management and Orchestration
- NAT: Network Address Translation
- NFV: Network Function Virtualization
- OCS: Online Charging system
- OFCS: Offline Charging System
- P-GW: Packet data network Gateway
- PCC: Policy and Charging Control
- QoS: Quality of Service
- PCRF: Policy and Charging Rules Function
- S-GW: Serving Gateway
- UE: User Equipment

## Claims

1. A method for data integrity control comprising:
- determining a demand for data integrity control for a service function of a service function entity in a service chaining scenario in which a service is provided via a service chain of a plurality of service function entities, and
- requesting one or more of the plurality of service function entities in the service chain other than said service function entity to report on occurrence of a specific event during provision of said service, the specific event being relevant for said service function of said service function entity, and wherein the specific event comprises dropping or loss of data relating to said service.

2. The method according to claim 1, wherein determining a demand for data integrity control comprises:
- deducing that said service function entity performs a service function for provision of said service which requires data integrity control and deciding to request to report on occurrence of the specific event based on the deduced service function of said service function entity, or
- receiving a request for reporting on occurrence of the specific event during provision of said service from said service function entity.

3. The method according to claim 1, wherein determining a demand for data integrity control comprises deducing that said service function entity performs a service function for provision of said service which requires data integrity control and deciding to request to report on occurrence of the specific event based on the deduced service function of said service function entity,
and the method further comprises:
- informing said service function entity about at least one of the deduced demand for integrity control and the requested reporting.

4. The method according to any one of claims 1 to 3, further comprising:
- receiving at least one report on occurrence of the specific event during provision of said service from at least one of the one or more requested service function entities using a control plane or out-of-band message, and
- notifying said service function entity of the at least one received report using a control plane or out-of-band message.

5. The method according to any one of claims 1 to 4, wherein a request corresponding to the requesting to report on occurrence of the specific event comprises at least one of:
- a reporting time setting indicating a time point or interval for reporting upon occurrence of the specific event,
- a reporting condition setting indicating at least one service-related condition for reporting on occurrence of the specific event, and
- a reporting type setting indicating a type of report and/or report communication on occurrence of the specific event.

6. The method according to any one of claims 1 to 5, wherein
- said service function of said service function entity comprises at least one of usage monitoring and data counting in the provision of said service, and/or
- a report of at least one of an identification and an amount of the dropped or lost data relating to said service is requested.

7. A method for data integrity control comprising, after a demand for data integrity control is determined, said demand for data integrity control being a demand for data integrity control for a service function of a service function entity in a service chaining scenario in which a service is provided via a service chain of a plurality of service function entities:
- receiving, at one or more of the plurality of service function entities in the service chain other than said service function entity, a request for reporting on occurrence of a specific event during provision of the service in the service chaining scenario the specific event being relevant for said service function of said service function entity and wherein the specific event comprises dropping or loss of data relating to said service,
- detecting at the one or more of the plurality of service function entities in the service chain other than said service function entity occurrence of the specific event during provision of said service, and
- causing at the one or more of the plurality of service function entities in the service chain other than said service function entity transmission of at least one report on occurrence of the specific event during provision of said service.

8. The method according to claim 7, wherein the request for reporting on occurrence of said specific event is received, using a control plane or out-of-band message, from a controlling entity configured to control one or more of the plurality of service function entities in the service chain, or, using a user plane or in-band message, from at least one of the plurality of service function entities.

9. The method according to claim 7 or 8, wherein the at least one report is caused to be transmitted, using a control plane or out-of-band message, to a controlling entity configured to control one or more of the plurality of service function entities in the service chain, or, using a user plane or in-band message, to at least one of the plurality of service function entities.

10. The method according to any one of claims 7 to 9, wherein:
- the request for reporting on occurrence of the specific event comprises at least one of a reporting time setting indicating a time point or interval for reporting upon occurrence of the specific event, a reporting condition setting indicating at least one service-related condition for reporting on occurrence of the specific event, and a reporting type setting indicating a type of report and/or report communication on occurrence of the specific event, and
- the at least one report on occurrence of the specific event is caused to be transmitted in accordance with the at least one of the indicated time point or interval, the at least one indicated service-related condition, and the indicated type of report and/or report communication.

11. The method according to any one of claims 7 to 10, wherein:
- said service function of said service function entity comprises at least one of usage monitoring and data counting in the provision of said service, and/or
- the at least one report comprises a report of at least one of an identification and an amount of the dropped or lost data relating to said service.

12. An apparatus for data integrity control comprising means for:
- determining a demand for integrity control for a service function of a service function entity in a service chaining scenario in which a service is provided via a service chain of a plurality of service function entities, and
- requesting one or more of the plurality of service function entities in the service chain other than said service function entity to report on occurrence of a specific event during provision of said service, the specific event being relevant for said service function of said service function entity, and wherein the specific event comprises dropping or loss of data relating to said service.

13. An apparatus for data integrity control, the apparatus being a service function entity providing a service function in a service chaining scenario in which a service is provided via a service chain of a plurality of service function entities, comprising means for, after a demand for data integrity control is determined, said demand for data integrity control being a demand for data integrity control for a further service function of a further service function entity in said service chain:
- receiving a request for reporting on occurrence of a specific event during provision of the service in the service chaining scenario, the specific event being relevant for said further service function of said further service function entity, and wherein the specific event comprises dropping or loss of data relating to said service,
- detecting occurrence of the specific event during provision of said service, and
- causing transmission of at least one report on occurrence of the specific event during provision of said service.

14. An apparatus for data integrity control comprising means configured to perform all steps of the methods according to claim 2 to 6.

15. A computer program product comprising computer-executable computer program code which, when the computer program code is executed on a computer, is configured to cause the computer to carry out all steps of the method according to any one of claims 1 to 6 or 7 to 11.

## Patentansprüche

1. Verfahren zur Datenintegritätskontrolle, das Folgendes umfasst:
Bestimmen eines Bedarfs für Datenintegritätskontrolle für eine Dienstfunktion einer Dienstfunktionsentität in einem Dienstverkettungsszenario, in dem ein Dienst über eine Dienstkette mehrerer Dienstfunktionsentitäten bereitgestellt wird, und
Anfordern, dass eine oder mehr der mehreren Dienstfunktionsentitäten in der Dienstkette außer der Dienstfunktionsentität bei Auftreten eines spezifischen Ereignisses während der Bereitstellung des Dienstes berichten, wobei das spezifische Ereignis für die Dienstfunktion der Dienstfunktionsentität relevant ist, und wobei das spezifische Ereignis Fallenlassen oder Verlust von Daten bezüglich des Dienstes umfasst.

2. Verfahren nach Anspruch 1, wobei das Bestimmen eines Bedarfs für Datenintegritätskontrolle Folgendes umfasst:
Deduzieren, dass die Dienstfunktionsentität eine Dienstfunktion zur Bereitstellung des Dienstes, der Datenintegritätskontrolle erfordert, durchführt, und Entscheiden, bei Auftreten des spezifischen Ereignisses eine Berichterstattung anzufordern, basierend auf der deduzierten Dienstfunktion der Dienstfunktionsentität, oder
Empfangen einer Anforderung zur Berichterstattung bei Auftreten des spezifischen Ereignisses während der Bereitstellung des Dienstes von der Dienstfunktionsentität.

3. Verfahren nach Anspruch 1, wobei das Bestimmen eines Bedarfs für Datenintegritätskontrolle Folgendes umfasst: Deduzieren, dass die Dienstfunktionsentität eine Dienstfunktion zur Bereitstellung des Dienstes, der Datenintegritätskontrolle erfordert, durchführt, und Entscheiden, bei Auftreten des spezifischen Ereignisses eine Berichterstattung anzufordern, basierend auf der deduzierten Dienstfunktion der Dienstfunktionsentität,
und wobei das Verfahren ferner Folgendes umfasst: Informieren der Dienstfunktionsentität über den deduzierten Bedarf für Integritätskontrolle und/oder die angeforderte Berichterstattung.

4. Verfahren nach einem der Ansprüche 1 bis 3, das ferner Folgendes umfasst:
Empfangen mindestens eines Berichts bei Auftreten des spezifischen Ereignisses während der Bereitstellung des Dienstes von mindestens einer der einen oder der mehreren aufgeforderten Dienstfunktionsentitäten unter Verwendung einer Steuerebene oder einer Out-of-Band-Nachricht, und
Benachrichtigen der Dienstfunktionsentität über den mindestens einen empfangenen Bericht unter Verwendung einer Steuerebene oder einer Out-of-Band-Nachricht.

5. Verfahren nach einem der Ansprüche 1 bis 4, wobei eine Anforderung entsprechend dem Anfordern, bei Auftreten des spezifischen Ereignisses zu berichten, mindestens eines des Folgenden umfasst:
eine Berichterstattungszeiteinstellung, die einen Zeitpunkt oder ein Zeitintervall zur Berichterstattung nach dem Auftreten des spezifischen Ereignisses angibt,
eine Berichterstattungsbedingungseinstellung, die mindestens eine dienstbezogene Bedingung zur Berichterstattung bei Auftreten des spezifischen Ereignisses angibt, und
eine Berichterstattungstypeinstellung, die einen Berichts- und/oder Berichtskommunikationstyp bei Auftreten des spezifischen Ereignisses angibt.

6. Verfahren nach einem der Ansprüche 1 bis 5, wobei die Dienstfunktion der Dienstfunktionsentität Nutzungsüberwachung und/oder Datenzählung bei der Bereitstellung des Dienstes umfasst, und/oder ein Bericht über eine Identifikation und/oder eine Menge der fallengelassenen oder verlorenen Daten bezüglich des Dienstes angefordert wird.

7. Verfahren zur Datenintegritätskontrolle, das Folgendes umfasst, nachdem ein Bedarf für Datenintegritätskontrolle bestimmt wird, wobei es sich bei dem Bedarf für Datenintegritätskontrolle um einen Bedarf für Datenintegritätskontrolle für eine Dienstfunktion einer Dienstfunktionsentität in einem Dienstverkettungsszenario handelt, in dem ein Dienst über eine Dienstkette mehrerer Dienstfunktionsentitäten bereitgestellt wird:
Empfangen, an einer oder mehr der mehreren Dienstfunktionsentitäten in der Dienstkette außer der Dienstfunktionsentität, einer Anforderung zur Berichterstattung bei Auftreten eines spezifischen Ereignisses während der Bereitstellung des Dienstes in dem Dienstverkettungsszenario, wobei das spezifische Ereignis für die Dienstfunktion der Dienstfunktionsentität relevant ist, und wobei das spezifische Ereignis Fallenlassen oder Verlust von Daten bezüglich des Dienstes umfasst, Detektieren, an der einen oder den mehreren der mehreren Dienstfunktionsentitäten in der Dienstkette außer der Dienstfunktionsentität, eines Auftretens des spezifischen Ereignisses während der Bereitstellung des Dienstes, und
Veranlassen, an der einen oder den mehreren der mehreren Dienstfunktionsentitäten in der Dienstkette außer der Dienstfunktionsentität,
einer Übertragung mindestens eines Berichts bei Auftreten des spezifischen Ereignisses während der Bereitstellung des Dienstes.

8. Verfahren nach Anspruch 7, wobei die Anforderung zur Berichterstattung bei Auftreten des spezifischen Ereignisses unter Verwendung einer Steuerebene oder Out-of-Band-Nachricht von einer Steuerentität, die dazu ausgelegt ist, eine oder mehr der mehreren Dienstfunktionsentitäten in der Dienstkette zu steuern, oder unter Verwendung einer Benutzerebene oder In-Band-Nachricht von mindestens einer der mehreren Dienstfunktionsentitäten empfangen wird.

9. Verfahren nach Anspruch 7 oder 8, wobei veranlasst wird, dass der mindestens eine Bericht unter Verwendung einer Steuerebene oder Out-of-Band-Nachricht zu einer Steuerentität, die dazu ausgelegt ist, eine oder mehr der mehreren Dienstfunktionsentitäten in der Dienstkette zu steuern, oder unter Verwendung einer Benutzerebene oder In-Band-Nachricht zu mindestens einer der mehreren Dienstfunktionsentitäten übertragen wird.

10. Verfahren nach einem der Ansprüche 7 bis 9, wobei:
die Anforderung zur Berichterstattung bei Auftreten des spezifischen Ereignisses eine Berichterstattungszeiteinstellung, die einen Zeitpunkt oder ein Zeitintervall zur Berichterstattung nach dem Auftreten des spezifischen Ereignisses angibt, und/oder eine Berichterstattungsbedingungseinstellung, die mindestens eine dienstbezogene Bedingung zur Berichterstattung bei Auftreten des spezifischen Ereignisses angibt, und/oder eine Berichterstattungstypeinstellung, die einen Berichts- und/oder Berichtskommunikationstyp bei Auftreten des spezifischen Ereignisses angibt, umfasst, und
veranlasst wird, dass der mindestens eine Bericht bei Auftreten des spezifischen Ereignisses gemäß dem angegebenen Zeitpunkt oder Zeitintervall und/oder der mindestens einen angegebenen dienstbezogenen Bedingung und/oder dem angegebenen Berichts- und/oder Berichtskommunikationstyp übertragen wird.

11. Verfahren nach einem der Ansprüche 7 bis 10, wobei:
die Dienstfunktion der Dienstfunktionsentität Nutzungsüberwachung und/oder Datenzählung bei der Bereitstellung des Dienstes umfasst, und/oder der mindestens eine Bericht einen Bericht über eine Identifikation und/oder eine Menge der fallengelassenen oder verlorenen Daten bezüglich des Dienstes umfasst.

12. Vorrichtung zur Datenintegritätskontrolle, die Mittel für Folgendes umfasst:
Bestimmen eines Bedarfs für Datenintegritätskontrolle für eine Dienstfunktion einer Dienstfunktionsentität in einem Dienstverkettungsszenario, in dem ein Dienst über eine Dienstkette mehrerer Dienstfunktionsentitäten bereitgestellt wird, und
Anfordern, dass eine oder mehr der mehreren Dienstfunktionsentitäten in der Dienstkette außer der Dienstfunktionsentität bei Auftreten eines spezifischen Ereignisses während der Bereitstellung des Dienstes berichten, wobei das spezifische Ereignis für die Dienstfunktion der Dienstfunktionsentität relevant ist, und wobei das spezifische Ereignis Fallenlassen oder Verlust von Daten bezüglich des Dienstes umfasst.

13. Vorrichtung zur Datenintegritätskontrolle, wobei die Vorrichtung eine Dienstfunktionsentität ist, die eine Dienstfunktion in einem Dienstverkettungsszenario bereitstellt, in dem ein Dienst über eine Dienstkette mehrerer Dienstfunktionsentitäten bereitgestellt wird, und die Mittel für Folgendes umfasst, nachdem ein Bedarf für Datenintegritätskontrolle bestimmt wird, wobei es sich bei dem Bedarf für Datenintegritätskontrolle um einen Bedarf für Datenintegritätskontrolle für eine weitere Dienstfunktion einer weiteren Dienstfunktionsentität in der Dienstkette handelt:
Empfangen einer Anforderung zur Berichterstattung bei Auftreten eines spezifischen Ereignisses während der Bereitstellung des Dienstes in dem Dienstverkettungsszenario, wobei das spezifische Ereignis für die Dienstfunktion der Dienstfunktionsentität relevant ist, und wobei das spezifische Ereignis Fallenlassen oder Verlust von Daten bezüglich des Dienstes umfasst,
Detektieren eines Auftretens des spezifischen Ereignisses während der Bereitstellung des Dienstes, und
Veranlassen einer Übertragung mindestens eines Berichts bei Auftreten des spezifischen Ereignisses während der Bereitstellung des Dienstes.

14. Vorrichtung zur Datenintegritätskontrolle, die Mittel umfasst, die dazu ausgelegt sind, alle Schritte der Verfahren nach den Ansprüchen 2 bis 6 durchzuführen.

15. Computerprogrammprodukt, das computerausführbaren Computerprogrammcode umfasst, der, wenn der Computerprogrammcode auf einem Computer ausgeführt wird, dazu ausgelegt ist, zu veranlassen, dass der Computer alle Schritte des Verfahrens nach einem der Ansprüche 1 bis 6 oder 7 bis 11 ausführt.

## Revendications

1. Procédé de contrôle d'intégrité de données comprenant :
- la détermination d'une demande de contrôle d'intégrité de données pour une fonction de service d'une entité de fonction de service dans un scénario de chaînage de services dans lequel un service est fourni par l'intermédiaire d'une chaîne de services d'une pluralité d'entités de fonctions de services, et
- la demande à une ou plusieurs de la pluralité d'entités de fonctions de services dans la chaîne de services autres que ladite entité de fonction de service de rapporter l'occurrence d'un événement spécifique durant la fourniture dudit service, l'événement spécifique étant pertinent pour ladite fonction de service de ladite entité de fonction de service, et dans lequel l'événement spécifique comprend l'abandon ou la perte de données relatives audit service.

2. Procédé selon la revendication 1, dans lequel la détermination d'une demande de contrôle d'intégrité de données comprend :
- la déduction que ladite entité de fonction de service réalise une fonction de service pour la fourniture dudit service qui exige un contrôle d'intégrité de données et la décision de demander le rapport de l'occurrence de l'événement spécifique sur la base de la fonction de service déduite de ladite entité de fonction de service, ou
- la réception d'une demande de rapport de l'occurrence de l'événement durant la fourniture dudit service en provenance de ladite entité de fonction de service.

3. Procédé selon la revendication 1, dans lequel la détermination d'une demande de contrôle d'intégrité de données comprend la déduction que ladite entité de fonction de service réalise une fonction de service pour la fourniture dudit service qui exige un contrôle d'intégrité de données et la décision de demander un rapport de l'occurrence de l'événement spécifique sur la base de la fonction de service déduite de ladite entité de fonction de service,
et le procédé comprenant en outre :
- la communication à ladite entité de fonction de service d'au moins un de la demande déduite de contrôle d'intégrité et du rapport demandé.

4. Procédé selon l'une quelconque des revendications 1 à 3, comprenant en outre :
- la réception d'au moins un rapport de l'occurrence de l'événement spécifique durant la fourniture dudit service en provenance d'au moins une des une ou plusieurs entités de fonctions de services demandées à l'aide d'un message dans le plan de contrôle ou hors bande, et
- la notification à ladite entité de fonction de service de l'au moins un rapport reçu à l'aide d'un message dans le plan de contrôle ou hors bande.

5. Procédé selon l'une quelconque des revendications 1 à 4, dans lequel une demande correspondant à la demande de rapporter l'occurrence de l'événement spécifique comprend au moins un :
- d'un réglage de temps de rapport indiquant un instant ou intervalle pour rapporter l'occurrence de l'événement spécifique,
- un réglage de condition de rapport indiquant au moins une condition relative au service pour rapporter l'occurrence de l'événement spécifique, et
- un réglage de type de rapport indiquant un type de report et/ou de communication de rapport de l'occurrence de l'événement spécifique.

6. Procédé selon l'une quelconque des revendications 1 à 5, dans lequel
- ladite fonction de service de ladite entité de fonction de service comprend au moins un d'une surveillance d'utilisation et d'un comptage de données dans la fourniture dudit service, et/ou
- un rapport d'au moins une d'une identification et d'une quantité des données abandonnées ou perdues relatives audit service est demandé.

7. Procédé de contrôle d'intégrité de données comprenant, après qu'une demande de contrôle d'intégrité de données est déterminée, ladite demande de contrôle d'intégrité de données étant une demande de contrôle d'intégrité de données pour une fonction de service d'une entité de fonction de service dans un scénario de chaînage de services dans lequel un service est fourni par l'intermédiaire d'une chaîne de services d'une pluralité d'entités de fonctions de services :
- la réception, au niveau d'une ou plusieurs de la pluralité d'entités de fonctions de services dans la chaîne de services autres que ladite entité de fonction de service, d'une demande de rapport de l'occurrence d'un événement spécifique durant la fourniture du service dans le scénario de chaînage de services, l'événement spécifique étant pertinent pour ladite fonction de service de ladite entité de fonction de service et dans lequel l'événement spécifique comprend l'abandon ou la perte de données relatives audit service,
- la détection au niveau des une ou plusieurs de la pluralité d'entités de fonctions de services dans la chaîne de services autres que ladite entité de fonction de service de l'occurrence de l'événement spécifique durant la fourniture dudit service, et
- la commande au niveau des une ou plusieurs de la pluralité d'entités de fonctions de services dans la chaîne de services autres que ladite entité de fonction de service de la transmission d'au moins un rapport de l'occurrence de l'événement spécifique durant la fourniture dudit service.

8. Procédé selon la revendication 7, dans lequel la demande de rapporter une occurrence dudit événement spécifique est reçue, à l'aide d'un message dans le plan de contrôle ou hors bande, en provenance d'une entité de contrôle configurée pour contrôler une ou plusieurs de la pluralité d'entités de fonctions de services dans la chaîne de services, ou, à l'aide d'un message dans le plan utilisateur ou dans la bande, en provenance d'au moins une de la pluralité d'entités de fonctions de services.

9. Procédé selon la revendication 7 ou 8, dans lequel il est fait en sorte que l'au moins un rapport soit transmis, à l'aide d'un message dans le plan de contrôle ou hors bande, à une entité de contrôle configurée pour contrôler une ou plusieurs de la pluralité d'entités de fonctions de services dans la chaîne de services, ou, à l'aide d'un message dans le plan utilisateur ou dans la bande, à au moins une de la pluralité d'entités de fonctions de services.

10. Procédé selon l'une quelconque des revendications 7 à 9, dans lequel :
- la demande de rapporter l'occurrence de l'événement spécifique comprend au moins un d'un réglage de temps de rapport indiquant un instant ou intervalle pour rapporter l'occurrence de l'événement spécifique, un réglage de condition de rapport indiquant une condition relative au service pour rapporter l'occurrence de l'événement spécifique, et un réglage de type de rapport indiquant un type de report et/ou communication de rapport de l'occurrence de l'événement spécifique, et
- il est fait en sorte que l'au moins un rapport de l'occurrence de l'événement spécifique soit transmis conformément à l'au moins un de l'instant ou intervalle indiqué, de l'au moins une condition relative au service indiquée, et du type de report et/ou communication de rapport indiqué.

11. Procédé selon l'une quelconque des revendications 7 à 10, dans lequel :
- ladite fonction de service de ladite entité de fonction de service comprend au moins un d'une surveillance d'utilisation et d'un comptage de données dans la fourniture dudit service, et/ou
- l'au moins un rapport comprend un rapport d'au moins une d'une identification et d'une quantité des données abandonnées ou perdues relatives audit service.

12. Appareil de contrôle d'intégrité de données comprenant des moyens de :
- détermination d'une demande de contrôle d'intégrité de données pour une fonction de service d'une entité de fonction de service dans un scénario de chaînage de services dans lequel un service est fourni par l'intermédiaire d'une chaîne de services d'une pluralité d'entités de fonctions de services, et
- demande à une ou plusieurs de la pluralité d'entités de fonctions de services dans la chaîne de services autres que ladite entité de fonction de service de rapporter l'occurrence d'un événement spécifique durant la fourniture dudit service, l'événement spécifique étant pertinent pour ladite fonction de service de ladite entité de fonction de service, et dans lequel l'événement spécifique comprend l'abandon ou la perte de données relatives audit service.

13. Appareil de contrôle d'intégrité de données, l'appareil étant une entité de fonction de service fournissant une fonction de service dans un scénario de chaînage de services dans laquelle un service est fourni par l'intermédiaire d'une chaîne de services d'une pluralité d'entités de fonctions de services, comprenant des moyens, après qu'une demande de contrôle d'intégrité de données est déterminée, ladite demande de contrôle d'intégrité de données étant une demande de contrôle d'intégrité de données pour une autre fonction de service d'une autre entité de fonction de service dans ladite chaîne de services, de :
- réception d'une demande de rapport d'une occurrence d'un événement spécifique durant la fourniture du service dans le scénario de chaînage de services, l'événement spécifique étant pertinent pour ladite autre fonction de service de ladite autre entité de fonction de service, et dans lequel l'événement spécifique comprend l'abandon ou la perte de données relatives audit service,
- détection d'une occurrence de l'événement spécifique durant la fourniture dudit service, et
- commande de la transmission d'au moins un rapport sur l'occurrence de l'événement spécifique durant la fourniture dudit service.

14. Appareil de contrôle d'intégrité de données comprenant des moyens configurés pour réaliser toutes les étapes des procédés selon les revendications 2 à 6.

15. Produit-programme informatique comprenant un code de programme informatique exécutable par ordinateur qui, lorsque le code de programme informatique est exécuté sur un ordinateur, est configuré pour amener l'ordinateur à mettre en œuvre toutes les étapes du procédé selon l'une quelconque des revendications 1 à 6 ou 7 à 11.
